# EUROPEAN PATENT SPECIFICATION

(11) **EP 0 542 473 B1**
(45) Date of publication and mention of the grant of the patent: **15.01.1997**
(21) Application number: 92310142.2
(22) Date of filing: 05.11.1992
(51) Int. Cl.: H01Q 1/12, H01Q 1/32

(54) **Window glass antenna device**
Scheibenantennenvorrichtung
Dispositif d'antenne de vitre

(30) Priority: 05.11.1991 JP 99101/91 U
(43) Date of publication of application: 19.05.1993
(73) Proprietor: NIPPON SHEET GLASS CO., LTD., Osaka-shi, Osaka 541 (JP)
(72) Inventor: Murakami, Harunori, c/o Nippon Sheet Glass Co. Ltd, Chuo-ku, Osaka-shi, Osaka (JP); Baba, Yuji, c/o Nippon Sheet Glass Co. Ltd., Chuo-ku, Osaka-shi, Osaka (JP)
(74) Representative: Pedder, James Cuthbert

(56) References cited:
- EP-A- 0 358 529
- DE-C- 4 125 999
- US-A- 5 017 933
- PATENT ABSTRACTS OF JAPAN vol. 014, no. 263 (E-938)7 June 1990 & JP-A-20 82 701 ( CENTRAL GLASS )

## Description

The present invention relates to a window glass antenna device for use on an automobile, for example, and more particularly to a window glass antenna device having an antenna in the form of defroster heater wires in a window glass panel of an automobile.

### Description of the relevant Art :

Window antenna are known from PATENT ABSTRACTS OF JAPAN of JP-A-2082701 and EPA-0 358529 but these are not of the type using heater wires.

Japanese laid-open utility model publication No. 63-129307 discloses a window glass antenna device having an antenna which comprises a plurality of defroster heater wires in a window glass panel of an automobile. The defroster heater wires have respective ends electrically connected to a bus bar, from which received radio signals can be transmitted through a DC blocking capacitor.

Since the defroster heater wires are used as antenna elements, the DC blocking capacitor is required to block a current which is supplied to heat the defroster heaters wires.

US-A-5017 933 shows another form of antenna in which defroster heater wires are incorporated in the antenna.

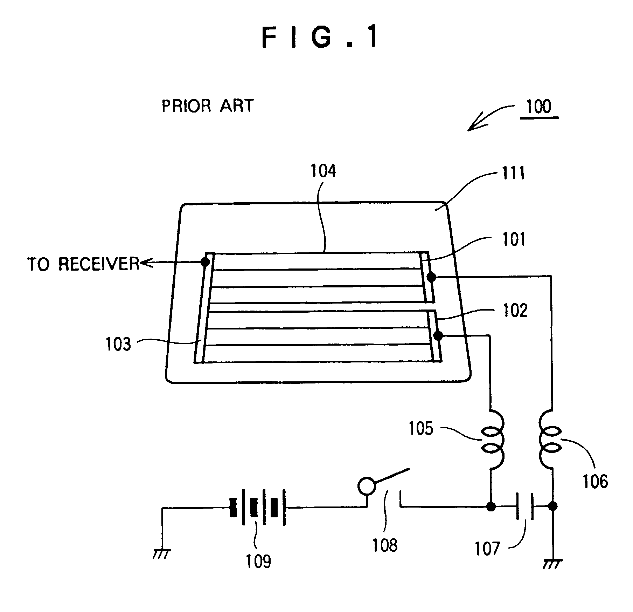

FIG. 1 of the accompanying drawings shows such a prior window glass antenna device with a plurality of defroster heater wires as antenna elements. The illustrated conventional window glass antenna device, generally denoted at 100, has defroster heater wires 104 having ends connected to bus bars 101, 102 and opposite ends connected to a bus bar 103. The bus bar 103 is connected through a DC blocking capacitor (not shown) to a radio receiver (not shown). The bus bars 101, 102 are connected respectively to choke coils 106, 105 that are connected to respective terminals of a capacitor 107. The capacitor 107 is connected through a switch 108 to a DC power supply 109. When the switch 108 is closed DC electric energy is supplied from the DC power supply 109 through the switch 108 and the choke coils 105, 106 to the defroster heater wires 104. The choke coils 105, 106 serve to provide a sufficiently high impedance in the frequency range of received radio waves as viewed from the defroster heater wires 104. The capacitor 107 serves to prevent power supply noises from being transmitted to the defroster heater wires 104.

In the case where the defroster heater wires 104 are disposed between glass layers of a laminated window glass panel 111, which is typically a rear window glass panel, it is necessary that the bus bars 101, 102, 103 be connected to outer terminals through copper foil or the like. However, the process of manufacturing such a window glass antenna device is complex and time-consuming because connecting the bus bars 101, 102, 103 to outer terminals through copper foil or the like requires a number of manufacturing steps.

The present invention therefore seeks to provide a window glass antenna device having defroster heater wires as antenna elements, which antenna device can be manufactured relatively simply and can supply radio signals that have been received or are to be transmitted without a discrete DC blocking capacitor.

According to the invention, there is provided a window glass antenna device comprising a laminated window glass panel having a pair of glass layers bonded to each other, a plurality of defroster heater wires disposed between said glass layers and having at least first and second ends; and at least two bus bars mutually spaced and disposed between said glass layers, one of said bus bars electrically interconnecting said first ends of the defroster heater wires and the other one of said bus bars electrically interconnecting said second ends of the defroster heater wires; and a first electrode disposed on an outer surface of one of said glass layers and joined to the other bus bar for supplying electric energy to heat said defroster heater wires, characterized in that a second electrode is disposed on the outer surface of said one of the glass layers in confronting relationship to said one of the bus bars so that said one of the bus bars and said second electrode jointly provide a capacitor for supplying a radio signal received by said defroster heater wires.

Each of the defroster heater wires may have a diameter less than 0.1 mm. Preferably, each of the defroster heater wires has a diameter ranging from 0.04 to 0.05 mm. The window glass antenna device further comprises an intermediate film disposed on the inner surface of one of the glass layers.

The invention will now be described in greater detail by way of example, with reference to the drawings, in which :
FIG. 1 is a schematic view of a conventional window glass antenna device;
FIG. 2 is a plan view of a window glass antenna device according to an embodiment of the present invention;
FIG. 3 is an enlarged cross-sectional view taken along line III - III of FIG. 2;
FIG. 4 is an enlarged cross-sectional view taken along line IV - IV of FIG. 2;
FIG. 5 is a plan view of an intermediate film of the window glass antenna device shown in FIG. 2;
FIG. 6 is a plan view of electrodes on an inner glass layer of the window glass antenna device shown in FIG. 2;
FIG. 7 is a plan view of a window glass antenna device according to another embodiment of the present invention;
FIG. 8 is an enlarged cross-sectional view taken along line VIII - VIII of FIG. 7;
FIG. 9 is an enlarged cross-sectional view taken along line IX - IX of FIG. 7;
FIG. 10 is a plan view of an intermediate film of the window glass antenna device shown in FIG. 7;
FIG. 11 is a plan view of electrodes on an inner glass layer of the window glass antenna device shown in FIG. 7;
FIG. 12 is a graph showing the relationship between the electrostatic capacitance of a capacitor and an insertion loss;
FIG. 13 is a graph showing the relationship between the area of confronting electrodes on opposite surfaces of a glass panel and the electrostatic capacitance between the electrodes; and
FIG. 14 is a graph showing antenna sensitivities for an FM broadcast band.

The terms "inner" and "outer" used herein are meant to indicate directions with respect to the geometrical center of the passenger compartment of an automobile.

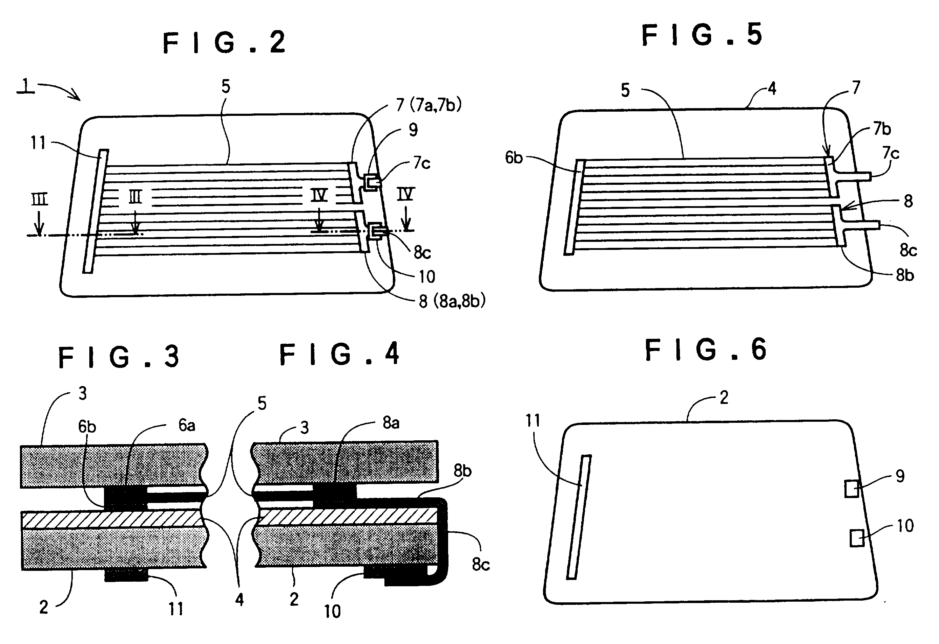

FIGS. 2 through 6 show a window glass antenna device according to an embodiment of the present invention.

As shown in FIGS. 2, 3, and 4, the window glass antenna device, generally designated by the reference numeral 1, is combined with an automobile window glass panel, such as a rear window glass panel, which comprises an inner glass layer 2 and an outer glass layer 3. The inner and outer glass layers 2, 3 are positioned so as to face inwardly and outwardly, respectively, with respect to the passenger compartment of an automobile. The window glass antenna device 1 comprises a transparent intermediate film and a plurality of horizontal defroster heater wires 5 which are positioned between the inner glass layer 2 and the outer glass layer 3. The defroster heater wires 5 serve as respective antenna elements.

The intermediate film 4 is attached to an outer surface of the inner glass layer 2, as shown in FIG. 3.

As shown in FIG. 5, the window glass antenna device 1 also includes a substantially vertical bus bar 6 positioned in a left end portion of the window glass panel and electrically interconnecting left ends of the defroster heater wires 5, and a pair of substantially vertical bus bars 7, 8 positioned in a right end portion of the window glass panel and electrically interconnecting right ends of the defroster heater wires 5 that are divided into upper and lower groups.

As shown in FIG. 3, the bus bar 6 comprises a pair of rectangular copper foil layers 6a, 6b attached respectively to an inner surface of the outer glass layer 3 and an outer surface of the intermediate film 4. The left ends of the defroster heater wires 5 are sandwiched between the copper foil layers 6a, 6b in electric contact therewith.

As shown in FIGS. 4 and 5, the bus bars 7, 8 comprise rectangular copper foil layers 7a, 7b, respectively, and rectangular copper foil layers 8a, 8b, respectively, the copper foil layers 7b, 8b having respective horizontal leader terminals 7c, 8c. The right ends of the defroster heater wires 5 are sandwiched between the copper foil layers 7a, 7b and 8a, 8b in electric contact therewith. The horizontal leader terminals 7c, 8c project outwardly from the window glass panel, and are folded around a right vertical edge of the inner glass layer 2 over the inner surface thereof, as shown in FIG. 4. The folded ends of the horizontal leader terminals 7c, 8c are fixed to respective electrodes 9, 10 disposed on the inner surface of the inner glass layer 2, as shown in FIGS. 2 and 4. DC electric energy is supplied from a heater power supply (not shown) to the defroster heater wires 5 through the electrodes 9, 10. Specifically, a direct current flows from the heater power supply through the electrode 9 (or 10) to the lower group of defroster heater wires 5 and then through the bus bar 6 to the upper group of defroster heater wires 5, after which the current flows from the electrode 10 (or 9) back to the heater power supply.

Each of the defroster heater wires 5 comprises a tungsten wire having a diameter ranging from 0.04 to 0.05 mm. The illustrated window glass antenna device has 12 defroster heater wires 5 as antenna elements. However, the window glass antenna device may have any number of defroster heater wires 5 as antenna elements.

In FIGS. 3 and 4, the inner surface of the outer glass layer 3 and the outer surface of the intermediate film 4 are shown as being spaced from each other. Actually, however, the inner surface of the outer glass layer 3 and the outer surface of the intermediate film 4 are bonded to each other with the copper foil layers 6a, 6b, 7a, 7b, 8a, 8b and the defroster heater wires 5 being pressed into the intermediate film 4.

As shown in FIGS. 2, 3, and 6, a vertical rectangular electrode 11 is attached to the inner surface of the inner glass layer 2 in aligned confronting relationship to the bus bar 6. The electrode 11 serves to supply radio signals that are received by the defroster heater wires 5 to a radio receiver (not shown). The bus bar 6 and the electrode 11 jointly provide a capacitor with the bus bar 6 serving as a first electrode and the electrode 11 as a second electrode. Therefore, radio signals received by the defroster heater wires 5 are transmitted through the capacitor to the radio receiver.

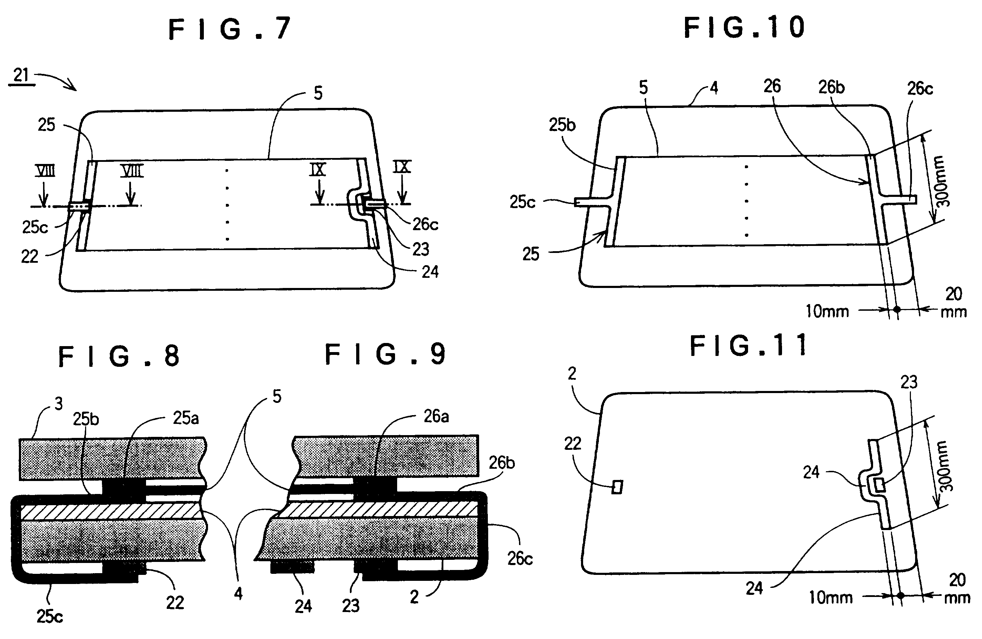

FIG. 7 through 11 illustrate a window glass antenna device according to another embodiment of the present invention. Those parts shown in FIGS. 7 through 11 which are identical to those shown in FIGS. 2 through 6 are denoted by identical reference characters, and will not be described in detail below.

The window glass antenna device, generally designated by the reference numeral 21, has a pair of substantially vertical bus bars 25, 26 positioned respectively in left and right end portions of the window glass panel and connected to the left and right ends, respectively, of the defroster heater wires 5. The bus bar 25 comprises a pair of rectangular copper foil layers 25a, 25b attached respectively to the inner surface of the outer glass layer 3 and the outer surface of the intermediate film 4. Similarly, the bus bar 26 comprises a pair of rectangular copper foil layers 26a, 26b attached respectively to the inner surface of the outer glass layer 3 and the outer surface of the intermediate film 4. The copper foil layers 25b, 26b have horizontal leader terminals 25c, 26c, respectively, that are folded around respective left and right vertical edges of the inner glass layer 2 over the inner surface thereof, as shown in FIGS. 8 and 9. The folded ends of the horizontal leader terminals 25c, 26c are fixed to respective electrodes 22, 23 disposed on the inner surface of the inner glass layer 2, as shown in FIGS. 7, 8, and 9. DC electric energy is supplied from a heater power supply (not shown) to the defroster heater wires 5 through the electrodes 22, 23. Specifically, a direct current flows from the heater power supply through the electrode 22 (or 23) to the defroster heater wires 5 and then to electrode 23 (or 22), after which the current flows back to the heater power supply.

As shown in FIGS. 7, 9, and 11, a substantially vertical rectangular electrode 24 is attached to the inner surface of the inner glass layer 2 in substantial alignment with the bus bar 26 in confronting relationship thereto, the electrode 24 having a central C-shaped portion 24a extending around the electrode 23. The electrode 24 serves to supply radio signals that are received by the defroster heater wires 5 to a radio receiver (not shown). The bus bar 26 and the electrode 24 jointly provide a capacitor with the bus bar 26 serving as a first electrode and the electrode 24 as a second electrode. Therefore, radio signals received by the defroster heater wires 5 are transmitted through the capacitor to the radio receiver.

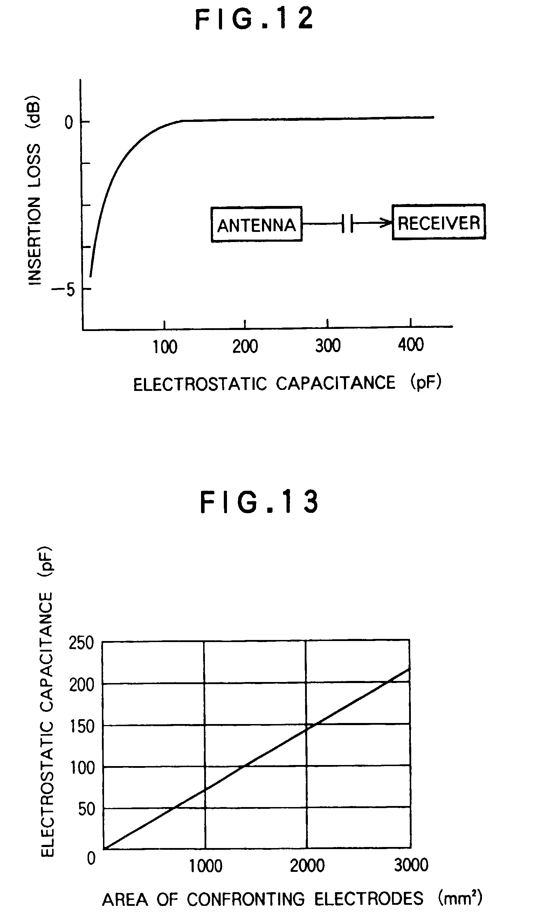

FIG. 12 shows the relationship between the electrostatic capacitance of the capacitor inserted between the defroster heater wires 5 and the radio receiver, and the insertion loss due to the capacitor, at a frequency of about 1 MHz in an AM broadcast band. The horizontal axis of the graph of FIG. 12 represents the electrostatic capacitance, and the vertical axis the insertion loss. FIG. 12 indicates that if the electrostatic capacitance of the capacitor is about 120 pF or greater, then any insertion loss can be ignored in the AM broadcast band.

FIG. 13 is a graph showing the relationship between the area of confronting electrodes on opposite surfaces of a glass panel and the electrostatic capacitance between the electrodes, the glass panel having a thickness of 2 mm. The horizontal axis of the graph represents the area of confronting electrodes, and the vertical axis the electrostatic capacitance between the electrodes. It can be seen from FIG. 13 that in order to achieve an electrostatic capacitance of at least 120 pF for substantially eliminating the insertion loss in the AM broadcast band, the area of confronting electrodes on the glass panel which is 2 mm thick should be 1700 mm² or greater.

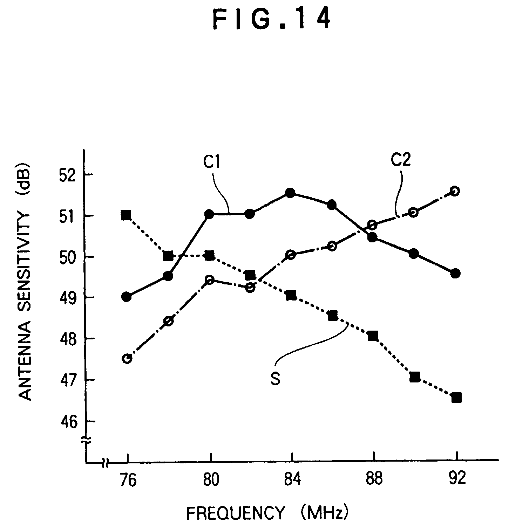

FIG. 14 shows sensitivities of window glass antennas for an FM broadcast band. The graph of FIG. 14 has a horizontal axis indicating frequencies and a vertical axis antenna sensitivities.

To obtain the results shown in FIG. 14, the window glass antenna 21 shown in FIGS. 7 through 11 was used as a sample, and measured for antenna sensitivities in an electric field of 60 dBµV/m. The window glass antenna 21 which was tested had the following dimensions:

As shown in FIG. 10, the bus bar 26 (the first electrode of the capacitor) had a length of 300 mm and a width of 10 mm.

As shown in FIG. 11, the electrode 24 (the second electrode of the capacitor) had a length of 300 mm and a width of 10 mm.

As shown in FIGS. 10 and 11, the bus bar 26 and the electrode 24 were spaced inwardly from the right edge of the window glass panel by a distance of 20 mm.

The window glass antenna 21 had 60 parallel defroster heater wires 5 as antenna elements spaced at intervals of 5 mm. The bus bars 25, 26 were spaced from each other by a distance of about 1200 mm.

In FIG. 14, a characteristic curve S is indicative of antenna sensitivities at different frequencies when received radio signals were directly supplied from the bus bar 26. Therefore, the characteristic curve S represents characteristics of a conventional window glass antenna device. A characteristic curve C1 is indicative of antenna sensitivities at different frequencies when received radio signals were supplied from the window glass antenna device 21 with the dimensions described above. Study of the characteristic curve C1 shows that the received radio signals can be detected highly efficiently by the window glass antenna device 21 without the use of a discrete capacitor.

FIG. 14 also shows a characteristic curve C2 which indicates antenna sensitivities at different frequencies when received radio signals were supplied from a window glass antenna device whose bus bar 26 had the dimensions shown in FIG. 10 and whose electrode 24 had a length of 100 mm, i.e., was 100 mm shorter at each of upper and lower ends than the electrode 24 shown in FIG. 11.

It can be understood that the antenna sensitivities may be varied by adjusting the configuration of the electrode 24. Therefore, desired frequency characteristics can be achieved without modifying the structure of the defroster heater wires 5 and the bus bars 25, 26.

While the defroster heater wires 5 are shown as being straight in the illustrated embodiments, they may be of an undulated shape so that they have an increased antenna length.

The electrodes which jointly serve as a capacitor with the glass as a dielectric may comprise transparent electrically conductive films.

Since the window glass antenna device according to the present invention has a built-in DC blocking capacitor, it is not required to have a discrete capacitor for blocking a heater current.

The defroster heater wires 5 are of a small diameter less than 0.1 mm. Therefore, many defroster heater wires 5 can be positioned in a unit width, resulting in an increase in the total effective length of the antenna elements even where the window glass area available for antenna installation remains the same.

## Claims

1. A window glass antenna device (I) comprising a laminated window glass panel having a pair of glass layers (2,3) bonded to each other, a plurality of defroster heater wires (5) disposed between said glass layers (2,3) and having at least first and second ends; and at least two bus bars (6,7,25,26) mutually spaced and disposed between said glass layers (2,3), one of said bus bars (6,26) electrically interconnecting said first ends of the defroster heater wires (5) and the other one of said bus bars (7,25) electrically interconnecting said second ends of the defroster heater wires (5); and a first electrode (9,23) disposed on an outer surface of one (2) of said glass layers (2,3) and joined to the other bus bar (7,25) for supplying electric energy to heat said defroster heater wires (5), **CHARACTERIZED in that** a second electrode (11,24) is disposed on the outer surface of said one (2) of the glass layers (2,3) in confronting relationship to said one (6,26) of the bus bars (6,7,25,26)so that said one (6,26) of the bus bars (6,7,25,26)and said second electrode (11,24) jointly provide a capacitor for supplying a radio signal received by said defroster heater wires (5).

2. A window glass antenna device according to claim 1 wherein said plurality of defroster heater wires (5) are divided into two groups lying in parallel, one end of each group of defroster wires (5) being electrically interconnected by a respective bus bar (7 or 8) while the other ends of all the defroster wires (5) are electrically interconnected by a third bus bar (6) and said second electrode (11) is in confronting relationship to the third bus bar (6) and said first electrode (9,10) is connected to one of said respective bus bar (7,8).

3. A window glass antenna device according to claim 2, further comprising a third electrode (10) disposed on said outer surface of said one (2) of the glass layers (2,3) and joined to said other of the said capacitor bus bars (7,8) for supplying electric energy to heat said defroster heater wires (5).

4. A window glass antenna device according to claim 1, wherein said second electrode (24) extends around said first electrode (23) on the outer surface of one of said glass layers (2,3).

5. A window glass antenna device according to claim 4, further comprises a third electrode (22) disposed on the outer surface of said one (2) of the glass layers (2,3) and joined to said one of the bus bars (26) for supplying electrical energy to heat said defroster heater wires.

6. A window glass antenna device according to any one of claims 1 to 5 wherein each of said defroster heater wires (5) has a diameter less than 0.1 mm.

7. A window glass antenna device according to claim 6, wherein each of said defroster heater wires (5) has a diameter ranging from 0.04 to 0.05 mm.

8. A window glass antenna device according to any one of claims 1 to 7, wherein said laminated window glass panel comprises a pair of glass layers (2,3) bonded to each other, one (2) of said glass layers (2,3) having said inner and outer surfaces, said bus bars (6) comprising a pair of copper foil layers disposed between said glass layers, said first and second ends of said defroster wires being sandwiched between said copper foil layers.

9. A window glass antenna device according to claim 8, further comprising an intermediate film (4) disposed on said inner surface of one (2) of the glass layers (2,3).

## Patentansprüche

1. Fensterglasantennenvorrichtung (1) umfassend eine laminierte Fensterglasplatte, die ein Paar von miteinander verbundenen Glasschichten (2, 3), eine Mehrzahl von Entfrosterheizdrähten (5), welche zwischen den Glasschichten (2, 3) angeordnet sind und wenigstens erste und zweite Enden aufweisen, und wenigstens zwei Stromschienen (6, 7, 25, 26), die im gegenseitigen Abstand und zwischen diesen Glasschichten (2, 3) angeordnet sind, wobei eine der Stromschienen (6, 26) die ersten Enden der Entfrosterheizdrähte (5) elektrisch miteinander verbindet und wobei die andere der Stromschienen (7, 25) die zweiten Enden der Entfrosterheizdrähte (5) elektrisch miteinander verbindet, und eine erste Elektrode (9, 23), die an einer Außenoberfläche einer (2) der Glasschichten (2, 3) angeordnet ist und mit der anderen Stromschiene (7, 25) verbunden ist, um elektrische Energie zum Erhitzen der Entfrosterheizdrähte (5) zu liefern,
dadurch gekennzeichnet, daß eine zweite Elektrode (11, 24) an der Außenoberfläche der einen (2) der Glasschichten (2, 3) in gegenüberliegender Beziehung zu der einen (6, 26) der Stromschienen (6, 7, 25, 26) derart angeordnet ist, daß die eine (6, 26) der Stromschienen (6, 7, 25, 26) und die zweite Elektrode (11, 24) gemeinsam einen Kondensator bilden, um ein Funksignal zu liefern, welches von den Entfrosterheizdrähten (5) empfangen wird.

2. Fensterglasantennenvorrichtung nach Anspruch 1, worin die Mehrzahl von Entfrosterheizdrähten (5) in zwei zueinander parallel liegende Gruppen unterteilt ist, wobei ein Ende jeder Gruppe von Entfrosterdrähten (5) elektrisch durch eine jeweilige Stromschiene (7 oder 8) verbunden ist, während die anderen Enden aller Entfrosterdrähte (5) elektrisch durch eine dritte Stromschiene (6) miteinander verbunden sind und wobei die zweite Elektrode (11) in gegenüberliegender Beziehung zu der dritten Stromschiene (6) angeordnet ist und wobei die erste Elektrode (9, 10) mit einer der jeweiligen Stromschiene (7, 8) verbunden ist.

3. Fensterglasantennenvorrichtung nach Anspruch 2 ferner umfassend eine dritte Elektrode (10), die an der Außenoberfläche der einen (2) der Glasschichten (2, 3) angeordnet ist und mit der anderen der Kondensator-Stromschienen (7, 8) verbunden ist, um elektrische Energie zum Erhitzen der Entfrosterheizdrähte (5) zu liefern.

4. Fensterglasantennenvorrichtung nach Anspruch 1, worin die zweite Elektrode (24) sich an der Außenoberfläche von einer der Glasschichten (2, 3) um die erste Elektrode (23) herum erstreckt.

5. Fensterglasantennenvorrichtung nach Anspruch 4 ferner umfassend eine dritte Elektrode (22), die an der Außenoberfläche der einen (2) der Glasschichten (2, 3) angeordnet ist und mit der einen der Stromschienen (26) verbunden ist, um elektrische Energie zum Erhitzen der Entfrosterheizdrähte zu liefern.

6. Fensterglasantennenvorrichtung nach einem der Ansprüche 1 bis 5, worin jeder der Entfrosterheizdrähte (5) einen Durchmesser von weniger als 0,1 mm hat.

7. Fensterglasantennenvorrichtung nach Anspruch 6, worin jeder der Entfrosterheizdrähte (5) einen Durchmesser im Bereich von 0.04 bis 0.05 mm hat.

8. Fensterglasantennenvorrichtung nach einem der Ansprüche 1 bis 7, worin die laminierte Fensterglasplatte ein Paar von miteinander verbundenen Glasschichten (2, 3) umfaßt, wobei eine (2) der Glasschichten (2, 3) die Innen- und Außenoberflächen aufweist, wobei die Stromschienen (6) ein Paar von zwischen den Glasschichten angeordneten Kupferfolienschichten umfassen und wobei die ersten und zweiten Enden der Entfrosterdrähte sandwichartig zwischen den Kupferfolienschichten angeordnet sind.

9. Fensterglasantennenvorrichtung nach Anspruch 8 ferner umfassend einen Zwischenfilm (4), der an der Innenoberfläche von einer (2) der Glasschichten (2, 3) angeordnet ist.

## Revendications

1. Dispositif d'antenne sur vitre (1) comprenant un panneau de vitre en verre feuilleté comportant une paire de couches de verre (2,3) fixées l'une à l'autre, une pluralité de fils chauffants dégivreurs (5) disposés entre lesdites couches de verre (2,3) et ayant au moins des première et seconde extrémités ; et au moins deux barres bus (6,7,25,26) mutuellement espacées et disposées entre ledites couches de verre (2,3), l'une desdites barres (6,26) interconnectant électriquement lesdites premières extrémités des fils chauffants dégivreurs (5) et l'autre extrémité desdites barres bus (7,25) interconnectant électriquement lesdites secondes extrémités des fils chauffants dégivreurs (5) ; et une première électode (9,23) disposée sur une surface extérieure de l'une (2) desdites couches de verre (2,3) et réunie à l'autre barre bus (7,25) pour fournir l'énergie électrique afin de chauffer lesdits fils chauffants dégivreurs (5), **caractérisé en ce qu'**une seconde électrode (11,24) est disposée sur la surface extérieure de ladite une (2) des couches de verre (2,3) en relation de confrontation avec ladite une (6,26) des barres bus (6,7,25,26), de sorte que ladite une (6,26) des barres bus (6,7,25,26) et ladite seconde électrode (11,24) constituent, conjointement, un condensateur pour fournir un signal radioélectrique reçu par lesdits fils chauffants dégivreurs (5).

2. Dispositif d'antenne sur vitre selon la revendication 1, dans lequel ladite pluralité de fils chauffants dégivreurs (5) sont divisés en deux groupes disposés parallèlement, une extrémité de chaque groupe de fils dégivreurs (5) étant électriquement interconnectée par une barre bus respective (7 ou 8) tandis que les autres extrémités de tous les fils dégivreurs (5) sont électriquement interconnectées par une troisième barre bus (6) et que ladite seconde électrode (11) est en relation de confrontation avec la troisième barre bus (6) et que ladite première électrode (9,10) est connectée à l'une desdites barres bus respectives (7,8).

3. Dispositif d'antenne sur vitre selon la revendication 2, comprenant, en outre, une troisième électrode (10) disposée sur ladite surface extérieure de ladite une (2) des couches de verre (2,3) et réunie à ladite autre desdites barres bus de condensateur (7,8) pour l'alimentation en énergie électrique destinée à chauffer lesdits fils chauffants dégivreurs (5).

4. Dispositif d'antenne sur vitre selon la revendication 1, dans lequel ladite seconde électrode (24) s'étend autour de ladite première électrode (23) sur la surface extérieure de l'une desdites couches de verre (2,3).

5. Dispositif d'antenne sur vitre selon la revendication 4, comprenant, en outre, une troisième électrode (22) disposée sur la surface extérieure de ladite une (2) des couches de verre (2,3) et réunie à ladite une desdites barres bus (26) pour l'alimentation en énergie électrique destinée à chauffer lesdits fils chauffants dégivreurs.

6. Dispositif d'antenne sur vitre selon l'une quelconque des revendications 1 à 5, dans lequel chacun desdits fils chauffants dégivreurs (5) a un diamètre inférieur à 0,1 mm.

7. Dispositif d'antenne sur vitre selon la revendication 6, dans lequel chacun desdits fils chauffants dégivreurs (5) a un diamètre compris entre 0,04 et 0,05 mm.

8. Dispositif d'antenne sur vitre selon l'une quelconque des revendications 1 à 7, dans lequel ledit panneau de vitre en verre feuilleté comprend une paire de couches de verre (2,3) fixées l'une à l'autre, l'une (2) desdites couches de verre (2,3) ayant lesdites surfaces intérieure et extérieure, lesdites barres bus (6) comprenant une paire de couches en feuille de cuivre disposées entre lesdites couches de verre, lesdites premières et secondes extrémités desdits fils dégivreurs étant prises en sandwich entre lesdites couches en feuille de cuivre.

9. Dispositif d'antenne sur vitre selon la revendication 8, comprenant, en outre, un film intermédiaire (4) disposé sur ladite surface intérieure de l'une (2) des couches de verre (2,3).
